# FASCICULE DE BREVET EUROPEEN

(11) **EP 2 727 844 B1**
(45) Date de publication et mention de la délivrance du brevet: **03.06.2020**
(21) Numéro de dépôt: 13190390.8
(22) Date de dépôt: 25.10.2013
(51) Int. Cl.: B64G 1/26

(54) **Dispositif de propulsion optimisé pour contrôle d'orbite et contrôle d'attitude de satellite**
Optimierte Antriebsvorrichtung für die Kontrolle der Umlaufbahn und der Höhe von Satelliten
Optimised propulsion device for satellite attitude control and orbit control

(30) Priorité: 31.10.2012 FR 1202936
(43) Date de publication de la demande: 07.05.2014
(73) Titulaire: THALES, 92400 Courbevoie (FR)
(72) Inventeur: Celerier, Bruno, 06156 Cannes La Bocca (FR)
(74) Mandataire: Collet, Alain

(56) Documents cités:
- EP-A1- 0 568 209
- EP-A1- 0 780 299
- EP-A1- 0 922 635
- EP-A2- 0 937 644
- JP-A- H10 278 898
- NL-C2- 1 032 158
- US-A- 4 407 469
- US-A1- 2009 078 829

## Description

La présente invention concerne le domaine des systèmes de contrôle d'orbite et le contrôle d'attitude de satellite, et plus particulièrement l'architecture des systèmes de propulsion embarqués pour le contrôle d'orbite de satellites géostationnaires de télécommunications.

Un système de commande d'attitude et d'orbite (SCAO) est un ensemble d'équipements et de logiciels de bord qui assure le pilotage d'un engin spatial pour lui imposer l'attitude voulue et ajuster son orbite aux exigences de la mission. Dans le cas d'un satellite géostationnaire de télécommunications, le contrôle d'attitude cherche à orienter le satellite de manière constante par rapport à la terre pour permettre le fonctionnement de divers instruments de mission ; le contrôle d'orbite cherche à maintenir la position du satellite dans une zone prédéfinie autour d'une position idéale sur l'orbite géostationnaire idéale.

Un système SCAO comprend généralement divers capteurs pour définir l'attitude et la position du satellite, des actionneurs tels que des dispositifs de propulsion et des dispositifs d'accumulation de moment cinétique pour modifier la position et l'attitude du satellite, et un logiciel de vol qui contrôle l'orientation et le maintien de l'orbite dans les différentes phases de vie du satellite. Le contrôle d'orbite consiste ainsi à qualifier la position du satellite, notamment au travers des six paramètres orbitaux (demi grand-axe, excentricité, inclinaison, argument du nœud ascendant, argument du périgée, anomalie vraie), et à réaliser les opérations nécessaires au moyen des systèmes de propulsion embarqués. Il est ainsi connu de disposer de propulseurs en divers emplacements sur le satellite pour permettre de corriger la trajectoire à intervalle plus ou moins proche en appliquant une force sur le satellite. Ces opérations de maintien à poste nécessitent de pouvoir disposer d'une réserve de carburant suffisante tout au long de la vie du satellite.

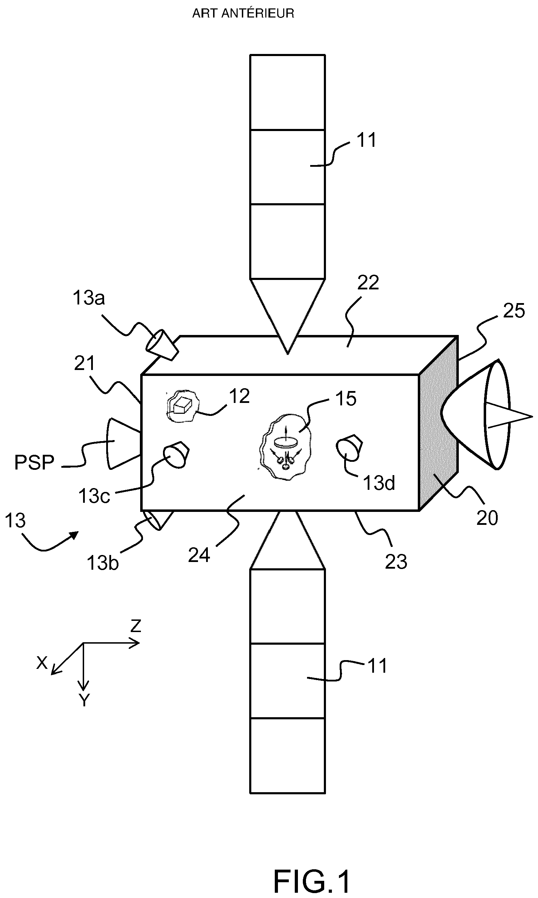

Un satellite est généralement constitué d'un sous-ensemble d'équipements et de logiciels dits de mission, tels que des systèmes de télécommunication ou d'observations, et d'un sous-ensemble dit de service qui regroupe les équipements et logiciels nécessaires au bon fonctionnement du satellite, de la séparation avec le lanceur à la fin de vie du satellite. La figure 1 représente des équipements de service d'un satellite d'architecture courante comprenant une structure parallélépipédique. Des générateurs solaires 11 sont fixés à la structure du satellite pour permettre l'alimentation en énergie électrique du satellite pendant toute la vie du satellite. Un système de commande d'attitude et d'orbite SCAO fait aussi partie des équipements de service. Un système SCAO comprend en particulier un ensemble de capteurs 12, un dispositif de propulsion 13 comprenant plusieurs propulseurs 13a, 13b, 13c et 13d, et un dispositif d'accumulation de moment cinétique 15.

L'ensemble de capteurs 12 a pour rôle de définir l'attitude et la position du satellite, par exemple au moyen de capteurs terre, capteurs soleil ou d'autres capteurs permettant de mesurer des variations de position ou d'attitude (gyromètres, accéléromètres). L'ensemble de capteurs 12 délivre une estimation de la position et de l'attitude du satellite dans les trois directions de l'espace.

Le dispositif de propulsion 13 comprend en général plusieurs propulseurs fixés en divers emplacements sur la structure du satellite. En délivrant une poussée en direction du centre de masse du satellite, le dispositif de propulsion permet de corriger la trajectoire et modifier la position du satellite et de son orbite. Le contrôle d'orbite agit ainsi par correction régulière de la trajectoire du satellite selon plusieurs directions et pour diverses positions du satellite sur son orbite.

Un système SCAO s'appuie aussi sur un dispositif d'accumulation de moment cinétique 15, comme par exemple un ensemble de roues à réaction, de roues à inertie ou d'actionneurs gyroscopiques. Un moteur électrique entraine une roue inertielle en rotation selon un axe du satellite, une variation de la vitesse de rotation générant un couple qui par réaction entraine en rotation le satellite autour de son centre de masse. Un dispositif d'accumulation de moment cinétique 15 comprenant trois roues à réaction (ou quatre roues pour la redondance) permet de stabiliser et de contrôler l'attitude selon les trois axes du satellite. On comprend que le fonctionnement du dispositif de propulsion 13 et du dispositif d'accumulation de moment cinétique 15 est fortement lié. Une poussée appliquée légèrement en dehors du centre de masse génère à la fois une modification de trajectoire du satellite et un couple permettant par exemple de désaturer les roues à réaction en conservant l'attitude du satellite.

Les missions d'un dispositif de propulsion de satellite comprennent le contrôle d'orbite, une contribution au contrôle d'attitude, ainsi que le transfert de l'orbite de lancement vers l'orbite de mission.

Pour répondre à ces missions, on connaît un premier type de propulseur, dit propulseur chimique, qui consomme un carburant chimique de type ergol ou propergol. Il permet de délivrer une poussée de forte puissance mais présente une consommation relativement élevée qui implique d'embarquer une masse de carburant pénalisante. Dans un second type de propulseur, dit propulseur à plasma, ou propulseur électrique, des atomes de xénon sont ionisés par collision avec des électrons. La poussée est générée lorsque les ions xénons chargés sont accélérés hors du propulseur par un champ électromagnétique. Bien que coûteux et de masse initiale importante, l'efficacité du propulseur est sensiblement plus importante que celle des propulseurs chimiques.

Notons que dans la plupart des systèmes connus de propulsion pour contrôle d'orbite, les différents propulseurs embarqués comprennent en réalité deux moteurs propulsifs positionnés côte à côte, pour des raisons de sécurité et de fiabilité de la mission. Cette redondance, bien connue de l'homme du métier, n'est pas représentée sur les figures mais on considère dans la suite qu'un propulseur peut être constitué d'un ou plusieurs moteurs propulsifs formant un ensemble propulsif, et dont la poussée qui peut être délivrée est identique, en orientation ou en intensité.

Le document EP 0 568 209 A1 qui décrit toutes les caractéristiques techniques du préambule de la revendication 1 est considéré comme le document de l'art antérieur le plus proche.

Dans la suite, nous aurons recours à un trièdre de référence lié au satellite couramment utilisé par l'homme du métier. Ce trièdre de référence comprend un axe Z dirigé vers la terre en configuration opérationnelle du satellite sur son orbite, aussi appelé axe de lacet, un axe Y perpendiculaire à l'orbite et orienté dans le sens opposé au moment cinétique de l'orbite (vers le sud pour une orbite geostationnaire), aussi appelé axe de tangage, et un axe X formant avec Y et Z un repère orthogonal direct, aussi appelé axe de roulis qui se trouve orienté selon la vitesse dans le cas des orbites circulaires.

Nous aurons aussi recours aux dénominations connues de l'homme du métier des faces de la structure parallélépipédique du satellite, incluant la face 20 dite terre, la face 21 dite anti-terre, la face 22 dite Nord, la face 23 dite Sud, la face 24 dite Est, et la face 25 dite Ouest ; ces dénominations découlant logiquement de l'orientation de la structure parallélépipédique du satellite sur son orbite par rapport à la terre, comme représenté sur la figure 1.

Le dispositif de propulsion 13 comprend généralement un premier propulseur, dit propulseur satellite principal PSP, fixé à la structure par la face anti-terre, et dont l'une des missions est d'assurer la poussée nécessaire au transfert de l'orbite de lancement vers l'orbite de mission. Un propulseur chimique à ergol est généralement retenu pour ce propulseur.

Le dispositif de propulsion 13 comprend également deux propulseurs 13a et 13b positionnés respectivement à proximité de l'arrête commune aux faces Nord et anti-terre, et à proximité de l'arrête commune aux faces Sud et anti-terre. Ces deux propulseurs 13a et 13b sont configurés pour permettre de diriger leurs poussées respectives vers le centre de masse du satellite. Une manœuvre de correction d'inclinaison consiste selon une technique connue de l'homme du métier à allumer le propulseur 13a à proximité d'un premier nœud orbital, en l'occurence le nœud ascendant, puis à allumer le propulseur 13b à proximité du nœud orbital opposé, le nœud descendant. La poussée du premier allumage, orientée vers le centre de masse, déplace le satellite dans une direction ayant une composante en Z et une composante en Y. Au nœud orbital opposé, douze heures plus tard dans le cas d'une orbite géostationnaire, la poussée du second allumage déplace le satellite dans une direction ayant une composante en Z opposée au premier allumage, permettant de compenser l'effet non recherché sur l'excentricité et une composante également opposée en Y mais dont les effets recherchés en inclinaison se cumulent. Ainsi, deux allumages d'intensités égales réalisés à douze heures d'intervalle à proximité des nœuds orbitaux permettent d'annuler l'effet sur l'excentricité de la composante radiale pour ne laisser qu'une légère variation de la longitude moyenne - qui peut être compensée en valeur moyenne par un choix adapté du demi-grand axe de l'orbite - et conserver une correction Nord-Sud. Cette procédure connue permet une correction de l'inclinaison, typiquement quotidiennement.

Par cette même technique il est aussi possible, en appliquant une seconde poussée d'intensité différente de la première, d'appliquer des corrections d'excentricité selon un axe perpendiculaire à un axe joignant les deux nœuds orbitaux. Des techniques ont aussi été développées pour permettre des corrections d'excentricité selon un second axe, en décalant l'allumage du propulseur par rapport au nœud orbital, mais au prix d'une moins bonne efficacité du contrôle de l'inclinaison. En résumé, on connaît de l'état de la technique les propulseurs 13a et 13b pour le contrôle de l'inclinaison et le contrôle de l'excentricité selon un axe sans désoptimisation du contrôle d'inclinaison, ou le contrôle de l'inclinaison et le contrôle de l'excentricité selon deux axes avec désoptimisation du contrôle d'inclinaison.

Le contrôle de la dérive ne peut pas être réalisé par ces deux propulseurs 13a et 13b , sauf à orienter les poussées à cet effet et à subir en contrepartie des couples indésirables. Pour le contrôle de la dérive, le dispositif de propulsion 13 comprend des propulseurs 13c et 13d fixés sur la face Est, ainsi que des propulseurs (non visibles sur la figure 1) fixés sur la face Ouest.

Le contrôle de l'inclinaison requiert davantage de carburant que le contrôle de l'excentricité et de la dérive. Pour cette raison, le contrôle de l'inclinaison est en général réalisé au moyen de propulseurs 13a et 13b de type propulseurs à plasma, plus faiblement consommateur de carburant, tandis que les propulseurs dédiés au contrôle de l'excentricité et de la dérive sont le plus souvent à ergol chimique.

On comprend donc l'enjeu de pouvoir disposer de dispositifs de propulsion efficaces. Les solutions actuelles souffrent de limites que la présente invention cherche à résoudre, en particulier pour la correction d'inclinaison. Comme nous l'avons décrit, les propulseurs 13a et 13b mis en œuvre pour cette correction nécessitent de pouvoir orienter la poussée en direction du centre de masse. Dès lors que le centre de masse du satellite évolue au cours de la vie du satellite, en raison de la consommation de carburant par exemple, toute imprécision dans l'estimation de sa position dégrade l'efficacité de la correction. En outre, pour une plateforme satellite dont le centre de masse est éloigné de la face anti-terre, l'efficacité de la correction d'inclinaison au moyen de propulseurs disposés à proximité de la face anti-terre est fortement dégradée. Autrement dit, les déplacements successifs du satellite selon l'axe Z qui se compensent mutuellement représentent une consommation de carburant importante et inutile. Les dispositifs de propulsion actuels présentent une effficacité limitée, de l'ordre de 50% environ pour des plateformes satellites les plus récentes.

L'invention vise à proposer une solution alternative pour le contrôle de l'orbite et la réalisation des couples à exercer sur le satellite pendant les maneuvres en palliant les difficultés de mise en œuvre citées ci-dessus. Pour limiter le coût et la masse des dispositifs de propulsion, et améliorer l'efficacité du contrôle d'orbite, une nouvelle architecture des systèmes de propulsion est envisagée.

A cet effet, l'invention a pour objet un satellite à orbite terrestre selon la revendication 1 comprenant un dispositif de propulsion pour le contrôle d'orbite d'un satellite à orbite terrestre comprenant une structure dont l'orientation est maintenue constante par rapport à la terre dans une configuration opérationnelle du satellite sur l'orbite; un centre de masse du satellite étant contenu dans la structure du satellite. Le dispositif de propulsion comprend deux propulseurs aptes à délivrer une poussée selon un axe, et fixés à la structure du satellite dans un même demi-espace séparé par le plan de l'orbite. Les propulseurs sont disposés sur la structure de part et d'autre du centre de masse selon un axe Z du satellite orienté vers la terre ; les propulseurs étant configurés de manière à ce qu'une force résultante des poussées des deux propulseurs activés simultanément présente une composante majoritaire selon un axe Y du satellite orienté perpendiculairement à l'orbite.

L'invention porte également sur un satellite à orbite géostationnaire comprenant un dispositif de propulsion ayant les caractéristiques précédemment décrites.

L'invention porte enfin sur un procédé de contrôle d'inclinaison d'orbite pour un satellite géostationnaire selon la revendication 8 comprenant un dispositif de propulsion ayant les caractéristiques précédemment décrites, comportant une étape consistant à activer simultanément les deux propulseurs pour réaliser une correction d'inclinaison de l'orbite du satellite.

L'invention sera mieux comprise et d'autres avantages apparaîtront à la lecture de la description détaillée des modes de réalisation donnés à titre d'exemple sur les figures suivantes.
La figure 1, déjà présentée, représente un satellite d'architecture courante et les principaux constituants d'un système de commande d'orbite et d'attitude,
la figure 2 représente un satellite muni d'un dispositif de propulsion selon une première variante de l'invention,
la figure 3 représente un satellite muni d'un dispositif de propulsion selon une seconde variante de l'invention,
la figure 4 représente un satellite muni d'un dispositif de propulsion selon une troisième variante de l'invention,
la figure 5 représente un satellite muni d'un dispositif de propulsion selon une quatrième variante de l'invention,
la figure 6 représente un satellite muni d'un dispositif de propulsion selon une cinquième variante de l'invention,
la figure 7 représente un satellite muni d'un dispositif de propulsion selon une sixième variante de l'invention.

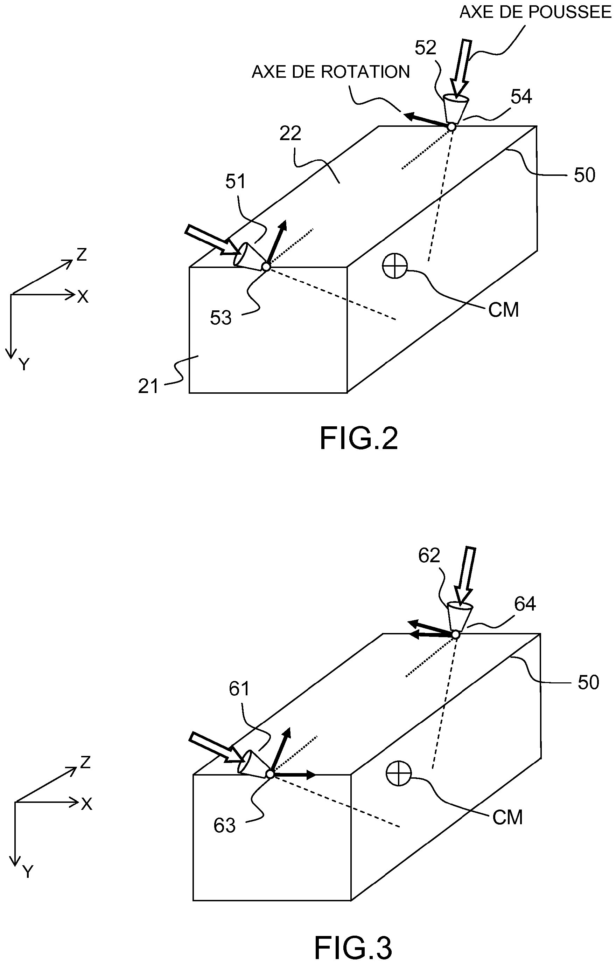

Par souci de clarté, les mêmes éléments porteront les mêmes repères dans les différentes figures. Notons également que sur les figures 2 à 7, les flèches en trait plein représentent des axes de rotations des propulseurs, et que les traits comprenant un évidement représentent des axes de poussée des propulseurs ; cette représentation étant précisée sur la figure 2.

La figure 2 représente un satellite muni d'un dispositif de propulsion selon une première variante de l'invention. Le satellite comprend une structure 50 parallélépipédique ; un centre de masse CM du satellite étant contenu à l'intérieur de la structure 50. En configuration opérationnelle du satellite en orbite, l'orientation du satellite est maintenue constante par rapport à la terre et est repérée au moyen du trièdre de référence déjà introduit. Ce trièdre comprend un axe Z dirigé vers la terre, un axe Y perpendiculaire à l'orbite et orienté dans le sens opposé au moment cinétique de l'orbite, et un axe X formant avec Y et Z un repère orthogonal direct. La dénomination déjà introduite des faces de la structure parallélépipédique est également reprise ; en particulier la structure 50 comprend une face 22 dite Nord et une face 21 dite anti-terre.

Dans le but d'améliorer l'efficacité globale du contrôle d'inclinaison, la présente invention permet de s'affranchir des incréments de vitesse non voulus du satellite selon l'axe Z, en disposant deux propulseurs 51 et 52 sur une même face du satellite, la face Nord sur la figure 2, de part et d'autre du centre de masse CM selon l'axe Z. Par une orientation adaptée de leurs poussées respectives, les propulseurs ainsi disposés permettent de limiter les composantes de force non voulues selon l'axe Z, et de compenser mutuellement ces composantes par un allumage simultané des deux propulseurs. Cet allumage simultané résulte en une force, exercée sur le centre de masse CM, ayant une composante majoritaire selon l'axe Y, améliorant l'efficacité du contrôle d'inclinaison.

Selon le mode de réalisation représenté sur la figure 2, un propulseur 51 est disposé sur la face Nord de la structure du satellite, à proximité de la face anti-terre. Un propulseur 52 est disposé sur la face Nord de la structure du satellite, à proximité de la face 20 dite terre. Les propulseurs 51 et 52 sont disposés à proximité du mileu de l'arrête commune respectivement aux faces Nord et anti-terre, et Nord et terre. Les deux propulseurs 51 et 52 sont aptes à délivrer une poussée selon un axe, dit axe de poussée.

Chacun des deux propulseurs 51 et 52 comprend en outre un mécanisme motorisé, respectivement référencés 53 et 54, apte à contrôler l'orientation du propulseur autour d'un axe sensiblement perperpendiculaire à la fois à son axe de poussée et à l'axe X. Conformément à la figure 1, l'axe de poussée des propulseurs n'est pas nécessairement orientable vers le centre de masse CM. L'allumage simultané des deux propulseurs implique qu'il n'est plus nécessaire de pouvoir appliquer une poussée sur le centre de masse pour le contrôle d'inclinaison.

Notons que les deux propulseurs 51 et 52 sont, sur la figure 2, disposés sur la face Nord de la structure du satellite. Dans une configuration alternative, ils peuvent être disposés sur la face Sud du satellite. Plus largement, l'invention porte sur un dispositif de propulsion comprenant deux propulseurs fixés au satellite sur une même face de la structure, disposés de part et d'autre du centre de masse CM selon l'axe Z, et configurés de manière à ce qu'une force résultante des poussées des deux propulseurs activés simultanément présente une composante majoritaire selon l'axe Y.

Nous avons indiqué que chacun des propulseurs comprend un mécanisme motorisé permettant de contrôler l'orientation du propulseur autour d'un axe sensiblement perperpendiculaire à la fois à son axe de poussée et à l'axe X. Par sensiblement perpendiculaire, on entend préférentiellement un axe formant un angle inférieur à 30° avec l'axe strictement perpendiculaire à l'axe de poussée et à l'axe X, pour permettre de bénéficier de manière optimale des avantages mentionnées de la présente invention.

Le mode de réalisation représenté sur la figure 2 permet avantageusement, par allumage simultané des deux propulseurs à proximité du nœud orbital, de corriger l'inclinaison de l'orbite. Notons qu'en pratique, la manœuvre de poussée n'est pas systématiquement réalisée au nœud orbital, mais pour une position sur l'orbite permettant de compenser la part de perturbation naturelle voulue. Dans un souci d'optimisation, on ne cherchera à compenser que l'effet des perturbations non périodiques, et non les perturbations d'effet périodique et d'amplitude acceptable, dans le but de limiter la quantité de carburant consommé.

Le mode de réalisation représenté sur la figure 2 permet en outre de générer et contrôler des couples exercés sur la structure par rotation des propulseurs autour de leurs axes respectifs. Typiquement, un basculement des propulseurs dans le même sens par rapport à l'axe X (c'est-à-dire soit selon le sens positif de l'axe X, soit selon son sens négatif) permet en plus du déplacement du satellite de générer un couple, positif ou négatif, autour de l'axe Z. Un basculement des propulseurs dans un sens opposé par rapport à l'axe X (par exemple le propulseur 51 selon le sens positif de l'axe X, et le propulseur 52 selon le sens négatif de l'axe X) permet en plus du déplacement du satellite de générer un couple, positif ou négatif, autour de l'axe Y. Notons également qu'un allumage différentiel des deux propulseurs, en durée ou en intensité, permet également de générer un couple, positif ou négatif, autour de l'axe X. Le dispositif ainsi configurés permet donc à la fois le contrôle en inclinaison avec une meilleure efficacité que les dispositifs de l'art antérieur, et la génération de couple selon les trois axes du satellite.

La figure 3 représente un satellite muni d'un dispositif de propulsion selon une seconde variante de l'invention. Dans cette variante le dispositif de propulsion comprend deux propulseurs 61 et 62 disposés sur la face Nord, respectivement à proximité du milieu de l'arrête commune à la face anti-terre et à proximité du milieu de l'arrête commune à la face terre. Les deux propulseurs 61 et 62 comprennent un mécanisme motorisé, respectivement référencés 63 et 64, apte à contrôler l'orientation du propulseur autour de deux axes non confondus sensiblement perpendiculaires à son axe de poussée. Comme précédemment, on entend par axe sensiblement perpendiculaire, un axe formant un angle inférieur à 30° avec l'axe strictement perpendiculaire, pour permettre de bénéficier de manière optimale des avantages mentionnées de la présente invention. Les mécanismes motorisés 63 et 64 ainsi configurés permettent d'orienter la poussée délivrée par chaque propulseur dans la plan (Y,Z), en direction du centre de masse CM ou en dehors du centre de masse.

Selon le même principe que celui décrit pour la figure 2, le mode de réalisation représenté sur la figure 3 permet le contrôle en inclinaison ainsi que la génération de couple selon les trois axes du satellite. Ce mode de réalisation permet en outre de corriger l'excentricité de l'orbite. Typiquement, un basculement du propulseur 62 dans le plan (Y, Z) en direction du sens positif de l'axe Z, combiné avec un allongement de la durée d'allumage du propulseurs permet de générer un même couple, et également une force voulue selon l'axe Z (dans le sens négatif de l'axe Z pour cet exemple ; une force dans le sens positif de l'axe Z pouvant être générée par le propulseur 61 selon le même principe). Selon des techniques bien connues de l'homme du métier, cette force pilotable selon l'axe Z permet de corriger l'excentricité selon l'axe X. Selon ces mêmes techniques, il est également connu que la maitrise de la force selon l'axe Z, appliquée pour diverses positions du satellite sur l'orbite, permet d'obtenir le contrôle d'inclinaison et de corriger l'excentricité selon les différents axes.

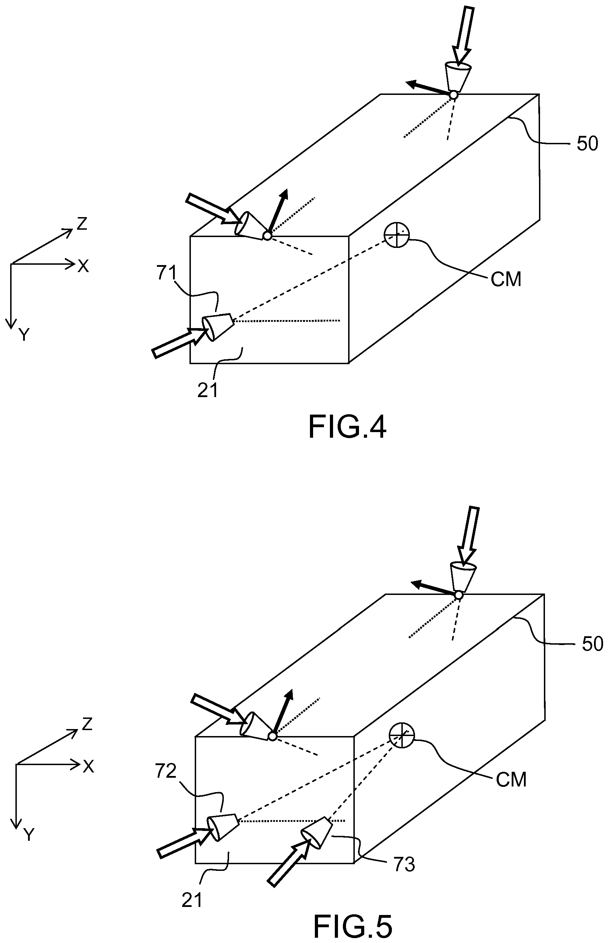

Les figures 4 à 7 représentent des variantes supplémentaires du dispositif de propulsion selon l'invention. Ces variantes ajoutent un ou plusieurs propulseurs complémentaires aux deux propulseurs décrits dans le cas des figures 2 et 3. Sur les figures 4 à 7, sont représentés deux propulseurs du même type que les propulseurs 51 et 52 de la figure 2, c'est-à-dire dont le mécanisme motorisé permet l'orientation du propulseur autour d'un seul axe. Cette représentation n'est pas limitative. Les dispositifs de propulsion présentés sur les figure 4 à 7 pouvant de la même manière être mis en œuvre pour deux propulseurs du même type que les propulseurs 61 et 62 de la figure 3, c'est-à-dire dont le mécanisme motorisé permet l'orientation du propulseur autour de deux axes.

La figure 4 représente un satellite muni d'un dispositif de propulsion selon une troisième variante de l'invention. Dans cette variante, le dispositif de propulsion comprend un propulseur complémentaire 71 fixé sur la structure 50, sur la face anti-terre dans le mode de réalisation représenté sur la figure 4, et configuré de manière à permettre de délivrer une poussée en direction du centre de masse CM selon un axe sensiblement perpendiculaire à l'axe Y. Comme précédemment, on entend par axe sensiblement perpendiculaire, un axe formant un angle inférieur à 30° avec l'axe strictement perpendiculaire, pour permettre de bénéficier de manière optimale des avantages mentionnées de la présente invention. Dans le mode de réalisation représenté sur la figure 4, le propulseur complémentaire est disposé sur la face anti-terre et dans un plan perpendiculaire à l'axe Y contenant le centre de masse du satellite. Cette configuration du dispositif de propulsion permet avantageusement, en plus du contrôle d'inclinaison, d'assurer le transfert d'orbite, de l'orbite basse d'injection après séparation de l'engin spatial lanceur vers l'orbite de mission par exemple géostationnaire. Le propulseur complémentaire ainsi configuré permet de mouvoir le satellite selon une trajectoire perpendiculaire à l'axe Y pendant le transfert d'orbite. Cette aptitude étant nécessaire pour permettre l'utilisation pendant le transfert d'orbite des générateurs solaires fixés sur les faces Nord et Sud du satellite et déployés parallélement à l'axe Y.

Lorsque le satellite est sur son orbite de mission, le dispositif de propulsion selon ce mode de réalisation permet d'exercer des forces dans le plan de l'orbite et présentant une composante substantielle selon l'axe X. Il devient alors possible de maitriser l'excentricité et la dérive en positionnant le propulseur 71 de manière à ce qu'il permettent de s'opposer à la dérive naturelle du satellite, dont le sens et l'ampleur dépendent de sa longitude.

La figure 5 représente un satellite muni d'un dispositif de propulsion selon une quatrième variante de l'invention. Dans cette variante, le dispositif de propulsion comprend deux propulseurs complémentaires 72 et 73 fixés sur la structure 50, sur la face anti-terre dans le mode de réalisation représenté sur la figure 5, et configurés de manière à permettre de délivrer une poussée en direction du centre de masse CM selon un axe sensiblement perpendiculaire à l'axe Y. Les propulseurs complémentaires 72 et 73 sont en outre disposés sur la structure 50 de part et d'autre du centre de masse CM selon l'axe X. Comme précédemment, on entend par axe sensiblement perpendiculaire, un axe formant un angle inférieur à 30° avec l'axe strictement perpendiculaire, pour permettre de bénéficier de manière optimale des avantages mentionnées de la présente invention. Dans le mode de réalisation représenté sur la figure 5, les propulseurs complémentaires sont disposés sur la face anti-terre 21 à proximité du milieu des arrêtes communes respectivement aux faces anti-terre et Ouest et aux faces anti-terre et Est. Cette configuration du dispositif de propulsion permet d'assurer le contrôle d'inclinaison, le contrôle d'excentricité et contribuer au transfert d'orbite selon les mêmes principes que précédemment décrits pour les figures 2 à 4. Cette configuration permet également d'assurer le contrôle de la dérive en Est et Ouest. Les propulseurs complémentaires 72 et 73 permettent d'exercer une force principalement dans un plan (X, Z) avec une composante substantielle respectivement positive et négative selon l'axe X de la vitesse, c'est-à-dire dans le plan de l'orbite. Avantageusement, cette variante du dispositif de propulsion assure donc le contrôle complet de l'orbite.

Lorsque le satellite est sur son orbite de mission, le dispositif de propulsion selon ce mode de réalisation permet d'exercer des forces dans le plan de l'orbite et présentant une composante substantielle selon l'axe X, à la fois dans le sens positif et dans le sens négatif. Il devient alors possible de maitriser l'excentricité et la dérive quelquesoit la dérive naturelle du satellite, c'est-à-dire quelle que soit sa longitude.

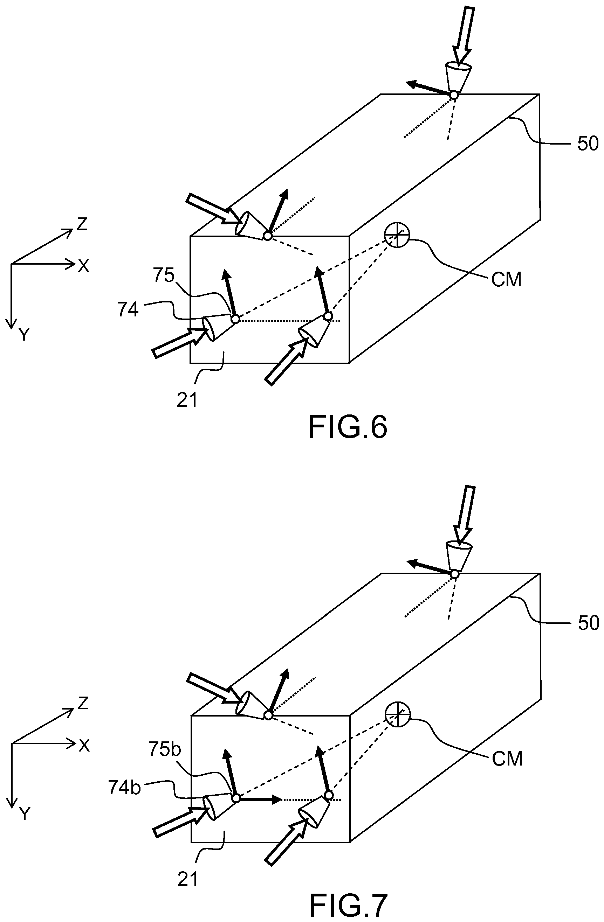

Les figures 6 à 7 représentent deux dernières variantes du dispositif de propulsion selon l'invention. Ces deux variantes ajoutent un mécanisme motorisé permettant de contrôler l'orientation des propulseurs complémentaires. Les dispositifs de propulsion représentés sur les figures 6 et 7 complètent le dispositif de propulsion représenté sur la figure 5, comprenant deux propulseurs complémentaires, en plus des deux propulseurs fixés sur la face Nord. Cette représentation n'est pas limitative. Les mécanismes motorisés des propulseurs complémentaires que nous allons détailler sur les figures 6 et 7 peuvent être mis en œuvre de la même manière pour un dipositif de propulsion ne comprenant qu'un seul propulseur complémentaire, c'est-à-dire comme représenté sur la figure 4.

La figure 6 représente un satellite muni d'un dispositif de propulsion selon une cinquième variante de l'invention. Dans cette variante, le propulseur complémentaire 74 comprend un mécanisme motorisé 75 apte à contrôler l'orientation du propulseur complémentaire 74 autour d'un axe sensiblement perpendiculaire à son axe de poussée. Comme précédemment, on entend par axe sensiblement perpendiculaire, un axe formant un angle inférieur à 30° avec l'axe strictement perpendiculaire, pour permettre de bénéficier de manière optimale des avantages mentionnées de la présente invention. Le dispositif de propulsion ainsi configuré permet avantageusement d'orienter la poussée délivrée par le propulseur complémentaire 74 en dehors du centre de masse CM du satellite, pour contribuer au contrôle d'attitude du satellite selon un axe ; cette capacité d'orientation du propulseur permettant de maitriser les couples dans une direction.

La figure 7 représente un satellite muni d'un dispositif de propulsion selon une sixième variante de l'invention. Dans cette variante, le propulseur complémentaire 74b comprend un mécanisme motorisé 75b apte à contrôler l'orientation du propulseur complémentaire 74b autour de deux axes non confondus sensiblement perpendiculaires à son axe de poussée. Comme précédemment, on entend par axe sensiblement perpendiculaire, un axe formant un angle inférieur à 30° avec l'axe strictement perpendiculaire, pour permettre de bénéficier de manière optimale des avantages mentionnées de la présente invention. Le dispositif de propulsion ainsi configuré permet avantageusement d'orienter la poussée délivrée par le propulseur complémentaire 74b en dehors du centre de masse CM du satellite, pour contribuer au contrôle d'attitude du satellite selon deux axes ; cette capacité d'orientation du propulseur selon deux axes permettant de maitriser les couples dans les deux directions perpendiculaires à sa force.

Le dispositif de propulsion comprend selon les différentes variantes décrits plus haut plusieurs propulseurs. D'une manière générale, l'architecture du dispositif de propulsion selon l'invention peut être mis en œuvre au moyen de propulseur de toute nature. Des propulseurs à ergol chimique ou des propulseurs à plasma peuvent notamment être mis en œuvre. Des propulseurs de différents types peuvent également être utilisés pour les propulseurs 51, 52, 61 et 62 assurant le contrôle d'inclinaison et pour les propulseurs complémentaires 71, 72, 73, 74 et 74b assurant les autres fonctions décrites plus haut. Dans un mode de réalisation préféré, le dispositif de propulsion comprend des propulseurs à plasma de type effet hall.

Les variantes du dispositif de propulsion selon l'invention sont représentées sur les figures 2 à 7 dans le cas d'un satellite dont la structure est de forme parallélépipédique. Cette caractéristique ne constitue pas à une limitation à la plus présente invention, qui s'applique de la même manière à toute forme de structure du satellite. Ainsi, l'invention porte plus largement sur un dispositif de propulsion pour le contrôle d'orbite d'un satellite à orbite terrestre comprenant une structure dont l'orientation est maintenue constante par rapport à la terre dans une configuration opérationnelle du satellite sur l'orbite; un centre de masse du satellite étant contenu dans la structure du satellite. Le dispositif de propulsion comprend deux propulseurs aptes à délivrer une poussée selon un axe, et fixés à la structure du satellite dans un même demi-espace séparé par le plan de l'orbite. Les propulseurs sont disposés sur la structure de part et d'autre d'un plan contenant le centre de masse et perpendiculaire à l'axe Z du satellite orienté vers la terre; les propulseurs étant configurés de manière à ce qu'une force résultante des poussées des deux propulseurs activés simultanément présente une composante majoritaire selon un axe Y du satellite orienté perpendiculairement à l'orbite.

L'invention porte également sur un satellite à orbite géostationnaire comprenant un dispositif de propulsion ayant les caractéristiques précédemment décrites. Si le dispositif de propulsion décrit par la présente invention s'adresse en premier lieu aux satellites géostationnaires de télécommunication, il peut être appliqué plus généralement, dans les mêmes conditions et pour les mêmes avantages sur tout type de satellite à orbite terrestre pour lequel on souhaite pouvoir contrôler l'inclinaison de l'orbite.

L'invention porte enfin sur un procédé de contrôle d'inclinaison d'orbite pour un satellite géostationnaire comprenant un dispositif de propulsion ayant les caractéristiques précédemment décrites, et comportant une étape consistant à activer simultanément les deux propulseurs 51 et 52 (ou 61 et 62) pour réaliser une correction d'inclinaison de l'orbite du satellite.

## Revendications

1. Satellite à orbite terrestre comprenant une structure (50) dont l'orientation est maintenue constante par rapport à la terre dans une configuration opérationnelle du satellite sur l'orbite; un centre de masse (CM) du satellite étant contenu dans la structure (50) du satellite,
le satellite comprenant en outre un dispositif de propulsion pour le contrôle d'orbite du satellite, le dispositif de propulsion comprenant deux propulseurs (51, 52) aptes à délivrer chacun une poussée selon un axe, et fixés à la structure (50) du satellite dans un même demi-espace séparé par le plan de l'orbite,
et les propulseurs (51, 52) étant disposés sur la structure (50) de part et d'autre d'un plan contenant le centre de masse (CM) et perpendiculaire à un axe Z du satellite orienté vers la terre;
les propulseurs (51, 52) étant configurés de manière à ce qu'une force résultante des poussées des deux propulseurs (51, 52) activés simultanément présente une composante majoritaire selon un axe Y du satellite orienté perpendiculairement à l'orbite, **caractérisé en ce que** chacun des deux propulseurs (61, 62) comprend un mécanisme motorisé (63, 64) apte à contrôler l'orientation dudit propulseur (61, 62) autour de deux axes sensiblement perpendiculaires à son axe de poussée.

2. Satellite selon la revendication 1, comprenant un propulseur complémentaire (71), fixé sur une face (21) de la structure (50), configuré de manière à permettre de délivrer une poussée en direction du centre de masse (CM) selon un axe sensiblement perpendiculaire à l'axe Y.

3. Satellite selon la revendication 1 ou 2, comprenant deux propulseurs complémentaires (72, 73) fixés sur la structure (50); chacun des propulseurs complémentaires (72, 73) étant configuré de manière à permettre de délivrer une poussée en direction du centre de masse (CM) selon un axe sensiblement perpendiculaire à l'axe Y ; les propulseurs complémentaires (72, 73) étant en outre disposés sur la structure (50) de part et d'autre du centre de masse (CM) selon un axe perpendiculaire à la fois à l'axe Y et à l'axe Z.

4. Satellite selon la revendication 2 ou 3, dont un propulseur complémentaire (74), apte à délivrer une poussée selon un axe, comprend un mécanisme motorisé (75) apte à contrôler l'orientation dudit propulseur complémentaire (74) autour d'un axe sensiblement perpendiculaire à son axe de poussée.

5. Satellite selon la revendication 2 ou 3, dont un propulseur complémentaire (74b), apte à délivrer une poussée selon un axe, comprend un mécanisme motorisé (75b) apte à contrôler l'orientation dudit propulseur complémentaire (74b) autour de deux axes sensiblement perpendiculaires à son axe de poussée.

6. Satellite selon l'une des revendications précédentes, dont un des propulseurs (51, 52, 61, 62, 71, 72) est un propulseur à plasma de type effet hall.

7. Satellite selon l'une des revendications précédentes, dans lequel le satellite est géostationnaire.

8. Procédé de contrôle d'inclinaison d'orbite d'un satellite selon la revendication 7, **caractérisé en ce qu'**il comporte une étape consistant à activer simultanément les deux propulseurs (51, 52) pour réaliser une correction d'inclinaison de l'orbite du satellite.

## Patentansprüche

1. Satellit mit Erdumlaufbahn, beinhaltend eine Struktur (50), deren Ausrichtung in Bezug auf die Erde in einer Betriebskonfiguration des Satelliten auf der Umlaufbahn konstant gehalten wird; wobei ein Gewichtsmittelpunkt (CM) des Satelliten in der Struktur (50) des Satelliten enthalten ist,
wobei der Satellit zudem eine Antriebsvorrichtung zur Kontrolle der Umlaufbahn des Satelliten beinhaltet, wobei die Antriebsvorrichtung zwei Antriebe (51, 52) beinhaltet, welche in der Lage sind, jeweils einen Schub entlang einer Achse abzugeben, und an der Struktur (50) des Satelliten in einem gleichen Halbraum befestigt sind, welcher durch die Umlaufbahnebene getrennt wird,
und wobei die Antriebe (51, 52) an der Struktur (50) beiderseits einer Ebene angeordnet sind, welche den Gewichtsmittelpunkt (CM) enthält und rechtwinklig zu einer Achse Z des Satelliten ist, welche auf die Erde ausgerichtet ist;
wobei die Antriebe (51, 52) so konfiguriert sind, dass eine resultierende Kraft der Schübe der beiden gleichzeitig aktivierten Antriebe (51, 52) eine mehrheitliche Komponente entlang einer Achse Y des Satelliten aufweist, welche rechtwinklig zur Umlaufbahn ausgerichtet ist, **dadurch gekennzeichnet, dass** jeder der beiden Antriebe (61, 62) einen motorisierten Mechanismus (63, 64) beinhaltet, welcher in der Lage ist, die Ausrichtung des Antriebs (61, 62) um zwei im Wesentlichen zu seiner Schubachse rechtwinklige Achsen zu kontrollieren.

2. Satellit nach Anspruch 1, beinhaltend einen zusätzlichen Antrieb (71), welcher an einer Seite (21) der Struktur (50) befestigt ist, welcher konfiguriert ist, um es zu ermöglichen, einen Schub in Richtung des Gewichtsmittelpunktes (CM) entlang einer im Wesentlichen zur Achse Y rechtwinkligen Achse abzugeben.

3. Satellit nach Anspruch 1 oder 2, beinhaltend zwei zusätzliche Antriebe (72, 73), welche an der Struktur (50) befestigt sind; wobei jeder der zusätzlichen Antriebe (72, 73) konfiguriert ist, um es zu ermöglichen, einen Schub in Richtung des Gewichtsmittelpunktes (CM) entlang einer im Wesentlichen zur Achse Y rechtwinkligen Achse abzugeben; wobei die zusätzlichen Antriebe (72, 73) zudem an der Struktur (50) beiderseits des Gewichtsmittelpunktes (CM) entlang einer Achse angeordnet sind, welche gleichermaßen rechtwinklig zur Achse Y und zur Achse Z ist.

4. Satellit nach Anspruch 2 oder 3, bei welchem ein zusätzlicher Antrieb (74), welcher in der Lage ist, einen Schub entlang einer Achse abzugeben, einen motorisierten Mechanismus (75) beinhaltet, welcher in der Lage ist, die Ausrichtung des zusätzlichen Antriebs (74) um eine Achse zu kontrollieren, welche im Wesentlichen rechtwinklig zu seiner Schubachse ist.

5. Satellit nach Anspruch 2 oder 3, bei welchem ein zusätzlicher Antrieb (74b), welcher in der Lage ist, einen Schub entlang einer Achse abzugeben, einen motorisierten Mechanismus (75b) beinhaltet, welcher in der Lage ist, die Ausrichtung des zusätzlichen Antriebs (74b) um zwei Achsen zu kontrollieren, welche im Wesentlichen rechtwinklig zu seiner Schubachse sind.

6. Satellit nach einem der vorhergehenden Ansprüche, bei welchem einer der Antriebe (51, 52, 61, 62, 71, 72) ein Plasma-Antrieb vom Typ Halleffekt ist.

7. Satellit nach einem der vorhergehenden Ansprüche, bei welchem der Satellit geostationär ist.

8. Verfahren zur Kontrolle der Umlaufbahn-Neigung eines Satelliten nach Anspruch 7, **dadurch gekennzeichnet, dass** es einen Schritt beinhaltet, welcher darin besteht, gleichzeitig beide Antriebe (51, 52) zu aktivieren, um eine Neigungskorrektur der Umlaufbahn des Satelliten zu bewerkstelligen.

## Claims

1. An earth-orbit satellite, comprising a structure (50) of which the orientation is maintained constant in relation to the Earth in an operational configuration of the satellite in the orbit; a center of mass (CM) of the satellite being contained in the structure (50) of the satellite,
the satellite further comprising a propulsion device for the orbit control of the satellite, the propulsion device comprising two thrusters (51, 52) each one suitable for delivering a thrust according to one axis, and fixed to the structure (50) of the satellite in the same half-space separated by the plane of the orbit,
and the thrusters (51, 52) being arranged on the structure (50) on either side of a plane containing the center of mass (CM) and perpendicular to a Z-axis of the satellite oriented towards the Earth;
the thrusters (51, 52) being configured in such a way that a force resulting from the thrusts of the two simultaneously activated thrusters (51, 52) represents a principal component according to a Y-axis of the satellite oriented perpendicular to the orbit, **characterized in that** each of the two thrusters (61, 62) comprises a motorized mechanism (63, 64) suitable for controlling the orientation of said thruster (61, 62) around two axes substantially perpendicular to its thrust axis.

2. Satellite according to claim 1, comprising an additional thruster (71), fixed on a face (21) of the structure (50), configured in such a way as to deliver a thrust in the direction of the center of mass (CM) according to an axis substantially perpendicular to the Y-axis.

3. Satellite according to claim 1 or 2, comprising two additional thrusters (72, 73) fixed on the structure (50); each of the additional thrusters (72, 73) being configured in such a way as to deliver a thrust in the direction of the center of mass (CM) according to an axis substantially perpendicular to the Y-axis; the additional thrusters (72, 73) furthermore being arranged on the structure (50) on either side of the center of mass (CM) according to an axis perpendicular to both the Y-axis and the Z-axis.

4. Satellite according to claim 2 or 3, of which an additional thruster (74), suitable for delivering a thrust according to one axis, comprises a motorized mechanism (75) suitable for controlling the orientation of said additional thruster (74) around an axis substantially perpendicular to its thrust axis.

5. Satellite according to claim 2 or 3, of which an additional thruster (74b), suitable for delivering a thrust according to one axis, comprises a motorized mechanism (75b) suitable for controlling the orientation of said additional thruster (74b) around two axes substantially perpendicular to its thrust axis.

6. Satellite according to one of the preceding claims, of which one of the thrusters (51, 52, 61, 62, 71, 72) is a Hall-effect plasma thruster.

7. Satellite according to one of the preceding claims, wherein the satellite is geostationary.

8. Method for controlling the orbit inclination for a satellite according to claim 7, **characterized in that** it includes a step consisting in simultaneously activating the two thrusters (51, 52) to perform a correction of the inclination of the orbit of the satellite.
